# EUROPÄISCHE PATENTSCHRIFT

(11) **EP 3 507 088 B1**
(45) Veröffentlichungstag und Bekanntmachung des Hinweises auf die Patenterteilung: **29.06.2022**
(21) Anmeldenummer: 17772315.2
(22) Anmeldetag: 04.09.2017
(51) Int. Cl.: B32B 15/18, B32B 1/02, B32B 3/06, B32B 5/22, B32B 7/12, B32B 15/08, B32B 27/26

(54) **SANDWICHADAPTER ZUM ANBRINGEN EINES GEGENSTANDS AN EINER FLÄCHE IN EINER UMGEBUNG**
SANDWICH ADAPTER FOR ATTACHING AN OBJECT TO A SURFACE IN A SURROUNDING AREA
ADAPTATEUR DE TYPE SANDWICH DESTINÉ À FIXER UN OBJET SUR UNE SURFACE DANS UN ENVIRONNEMENT

(30) Priorität: 05.09.2016 DE 102016010725
(43) Veröffentlichungstag der Anmeldung: 10.07.2019
(73) Patentinhaber: tesa nie wieder bohren GmbH, 63457 Hanau (DE)
(72) Erfinder: BRAUN, Frank, 63584 Gründau (DE)
(74) Vertreter: Patentanwälte Gierlich & Pischitzis Partnerschaft mbB
(86) Internationale Anmeldenummer: PCT/EP2017/072131
(87) Internationale Veröffentlichungsnummer: WO 2018/042041

(56) Entgegenhaltungen:
- WO-A1-03/036106
- DE-B3-102008 037 095
- DE-U1-202014 102 388

## Beschreibung

### I. Anwendungsgebiet

Die vorliegende Erfindung betrifft einen Sandwichadapter zum Anbringen eines Gegenstandes, wie einen Handtuchhalter, einen Seifenhalter, ein Regal, eine Leuchte oder dergleichen Ausstattungsartikel, an einer beliebigen Fläche, insbesondere einer Fläche mit Kacheln, Marmorplatten oder mit dergleichen Wandverkleidungen ausgestatteten Räumen, in einer Umgebung, wie beispielsweise einem Badezimmer.

### II. Technischer Hintergrund

Es sind Montageelemente zum ortsfesten Anbringen von Gegenständen an einer Fläche beispielsweise aus der DE 20 2014 102 388 U1 bekannt. Diese weisen einen Grundkörper auf, an welchem ein Adapter zum Anbringen von Gegenständen befestigbar ist. Der Grundkörper kann unter Verwendung eines Haftmittels, welches sich zwischen dem Grundkörper und der Fläche befindet, an dieser befestigt werden. Der Adapter besteht außerdem aus einem an dem Grundkörper mittels Nieten befestigten Federelement und einer Platte, wobei das Federelement nach oben ragende Federenden aufweist, die jeweils mit einem Haken versehen sind und in Schlitze der Platte eingreifen. Bei dem Haftmittel handelt es sich üblicherweise um einen Klebstoff, welcher unter Zugabe von Feuchtigkeit aushärtet.

Zur Aushärtung eines solchen Klebstoffs muss diesem Feuchtigkeit zugeführt werden. Dies erfolgt beispielsweise, wie in der DE 10 2008 037 095 B3 beschrieben, mittels innerhalb des Grundkörpers vorhandenen Wasser-reservoirs. Alternativ kann zur Aushärtung des Klebstoffs auch die Luftfeuchtigkeit der in der Umgebung des Klebstoffs vorhandenen Luft verwendet werden. Zu diesem Zweck kann der Grundkörper, wie beispielsweise in der WO 03/036 106 A1 gezeigt, aus einem offenporigen Material bestehen. Somit kann ausreichend Feuchtigkeit zu dem Klebstoff transportiert werden, sodass dieser aushärtet und den Grundkörper mit der Fläche derart verbindet, dass Gegenstände an dem Grundkörper angebracht werden können. Mögliche, aus dem Stand der Technik bekannte Materialien, die diese Aufgabe erfüllen, sind beispielsweise Sintermetalle.

Ein solcher Grundkörper muss eine hinreichende Gas- und Feuchtigkeitsdurchlässigkeit aufweisen, um ausreichend Feuchtigkeit aus der Umgebung durch den Grundkörper hindurch zu dem Klebstoff, welche an dem Grundkörper anliegt, zu transportieren. Gleichzeitig muss der Grundkörper eine hohe mechanische Stabilität zur Anbringung eines Gegenstands an ihm bereitstellen. Folglich ist bei der Auslegung des Grundkörpers stets ein Kompromiss zu treffen zwischen einer hinreichend großen Porengröße für eine gute Gas- und Feuchtedurchlässigkeit und einer nicht zu großen Porengröße, also einer hinreichend hohen Materialdichte, für eine gute mechanische Stabilität.

Dieser Kompromiss gelingt mit dem aus dem Stand der Technik bekannten Grundkörper aus Sintermetall nicht immer. Außerdem ist die Herstellung des bekannten Grundkörpers mit hohen Kosten verbunden, da für jede Grundkörperform und -große eine eigens angefertigte Sintermetallform hergestellt werden muss und das Sinterpulver an sich vergleichsweise teuer ist. Bedingt durch die hohen Kosten für die Herstellung der Sinterform ist eine flexible Anpassung des Grundkörpers an unterschiedliche Formen und Größen ebenfalls mit hohen Kosten verbunden.

### III. Darstellung der Erfindung

### a) Technische Aufgabe

Es ist daher die Aufgabe der Erfindung, einen Sandwichadapter zum Anbringen eines Gegenstandes an einer Fläche zur Verfügung zu stellen, bei dem die mechanischen Eigenschaften verbessert sind und gleichzeitig gewährleistet ist, dass dieser zum Anbringen von Gegenständen mittels eines durch Feuchtigkeit aushärtenden Haftmittels an einer Fläche verwendet werden kann, sodass ein für unterschiedliche Anwendungen optimierter Adapter auf einfache Weise, kostengünstig und flexibel insbesondere auch in verschiedenen Flächenformen ausgestaltet bzw. bereitgestellt werden kann.

### b) Lösung der Aufgabe

Zur Lösung dieser Aufgabe wird ein Sandwichadapter mit den Merkmalen des Anspruchs 1 vorgeschlagen. Weitere Ausgestaltungen der vorliegenden Erfindung ergeben sich aus den Unteransprüchen.

Erfindungsgemäß wird ein Sandwichadapter zum Anbringen eines Gegenstandes an einer Fläche in einer Umgebung, wie beispielsweise in einem Badezimmer, vorgeschlagen, der einen Grundkörper und eine poröse Schicht umfasst. Der Grundkörper ist dazu eingerichtet, dass der Gegenstand mittelbar oder unmittelbar an diesem befestigt werden kann , wobei an dem Grundkörper ein Halterelement zum Haltern des Gegenstandes angebracht ist. Der Grundkörper, die poröse Schicht und die Haftfläche weisen eine flächenmäßige Ausdehnung auf, wonach mit dem Adapter ein Sandwichadapter bereitgestellt ist, der mit dem Grundkörper einerseits und der porösen Schicht andererseits zweischichtig oder zweiteilig ausgebildet ist. Die poröse Schicht ist als Sinterschicht direkt auf die Unterseite des Grundkörpers aufgesintert, und das Verhältnis der Dicke des Grundkörpers zu der Dicke der porösen Schicht liegt in einem Bereich von 10:1 und 1:1 und vorzugsweise zwischen 8:1 und 2:1 und höchstvorzugsweise zwischen 6:1 und 4:1, wobei das Halterelement mittels eines Befestigungselements an dem Grundkörper befestigt ist, welches nur in den Grundkörper eingreift. Des Weiteren weist der Grundkörper eine Unterseite auf, an welcher die poröse Schicht anliegt. Die poröse Schicht weist eine dem Grundkörper abgewandte Haftfläche auf, die dazu eingerichtet ist, in Kontakt mit einem Haftmittel zu treten. Die poröse Schicht weist eine Porosität auf, die einen Transport von gas- bzw. luftgebundener Feuchtigkeit aus der Umgebung durch diese hindurch zu einem feuchtigkeitsaushärtenden Haftmittel, welches an der Haftfläche der porösen Schicht anliegt, ermöglicht. Die poröse Schicht steht mit ihren äußeren Seitenflächen in Kontakt mit der Umgebung. Dementsprechend findet der Transport der Feuchtigkeit von der Umgebung zu der Haftfläche und somit zu dem Haftmittel innerhalb der Schicht zunächst im Wesentlichen entlang und parallel zu einer Mittelebene oder einer gekrümmten Mittelfläche der porösen Schicht statt.

Die Porosität der porösen Schicht ist in Abhängigkeit von einem konkreten Haftmittel und abhängig von der im Einzelfall vorgesehenen Dicke der Haftmittelschicht vorzugsweise so gewählt, dass eine Aushärtung des Haftmittels, also eine Zustandsänderung von viskos/flüssig zu fest innerhalb von 12 Stunden, jedoch weiter vorzugsweise innerhalb eines Arbeitstages von 8 Stunden, möglich ist. In diesem Zusammenhang ist es von Vorteil, wenn die Porengröße derart gewählt wird, dass diese ein Eindringen des gewählten Haftmittels begrenzt. Ein zu tiefes Eindringen des Haftmittels in die Poren der porösen Schicht würde die Aushärtestrecke im Haftmittel und folglich die Aushärtezeit des Haftmittels übermäßig vergrößern.

Der zweiteilige bzw. zweischichtige Sandwichadapter mit seinem Grundkörper einerseits und seiner porösen Schicht andererseits übernimmt die grundsätzliche Befestigungsfunktion des aus dem Stand der Technik bekannten Grundkörpers, ermöglicht jedoch zusätzlich eine Berücksichtigung der Randbedingungen, die durch den anzubringenden Gegenstand sowie die Umgebungsbedingungen vorgegeben werden. Dies wird erreicht, indem die zwei unterschiedlichen Funktionen, d.h. die Bereitstellung einer mechanischen Stabilität zur Anbringung von Gegenständen und der Transport von gas- bzw. luftgebundener Feuchtigkeit, durch zwei verschiedene Materialien, die für den jeweiligen Einsatz speziell angepasst werden können, verwirklicht werden.

Beispielsweise können die Porosität der porösen Schicht auf den Transport von Gas und Feuchtigkeit einerseits und die mechanischen Eigenschaften des Grundkörpers andererseits getrennt voneinander optimiert werden. Es wäre zum Beispiel eine Kombination denkbar, bei der sowohl die Festigkeit des Grundkörpers als auch die Porosität der porösen Schicht gleichzeitig erhöht werden. Eine solche Kombination wäre mit einem herkömmlichen Grundkörper nicht denkbar, da die Erhöhung der Porosität zu einer verringerten Festigkeit bzw. eine erhöhte Festigkeit gleichzeitig zu einer Verringerung der Porosität führen würde.

Ein weiterer Vorteil des erfindungsgemäßen Sandwichadapters gegenüber aus dem Stand der Technik bekannten Grundkörpern liegt darin, dass der erfindungsgemäße Sandwichadapter kostengünstiger herstellbar ist, da für den erfindungsgemäßen Sandwichadapter in seiner Gesamtheit keine speziellen und folglich teuren Materialien mehr erforderlich sind, welche sowohl gute mechanische Eigenschaften aufweisen als auch einen Transport von Gas und Feuchtigkeit ermöglichen. Der Grundkörper könnte beispielsweise aus kostengünstigen Metallen, die in Blechlagen vorliegen, gefertigt werden.

Die Verwendung von Blechlagen zur Herstellung des Grundkörpers ermöglicht zudem eine freie Gestaltung der Form des Sandwichadapters in seiner Aufsicht, da beliebige Formen aus einer solchen Blechlage gestanzt werden können. Eine Begrenzung der Fläche des Sandwichadapters durch die Werkzeuggröße einer Presse, wie diese üblicherweise zur Herstellung von herkömmlichen einteiligen Grundkörpern aus Sintermetall verwendet wird, ist folglich nicht vorhanden. Die flächenmäßige Ausdehnung von Grundkörper, poröser Schicht und folglich der Haftfläche kann somit einfach an die entsprechende Anwendung angepasst werden. Zudem können auf kostengünstige Weise eine Vielzahl von unterschiedlichen Flächenformen hergestellt werden.

Die als Sinterschicht direkt auf die Unterseite des Grundkörpers aufgesinterte poröse Schicht könnte aus einem Sintermetall, beispielsweise auf Bronze-, Aluminium- oder Kupferbasis, gefertigt sein. Zwar würde dies den Einsatz von kostenintensiven Rohmaterialien erfordern, jedoch könnte dennoch eine Kostenersparnis gegenüber dem Stand der Technik erzielt werden, da die Dicke der porösen Schicht im Vergleich zu der Dicke des gesamten Sandwichadapter relativ gering ist.

Denkbar ist auch, dass der Grundkörper eine Porosität aufweist, die einen Transport von Gas und Feuchtigkeit aus der Umgebung durch diesen hindurch zu der porösen Schicht zulässt. In diesem Falle könnte der Transport von Feuchtigkeit zu der Haftfläche an der porösen Schicht vergrößert werden. Insbesondere wäre an dieser Stelle ein aus dem Trägerkunststoff hergestellter Grundkörper denkbar.

Alternativ kann der Grundkörper aus einem metallischen Material hergestellt sein. Für eine Anwendung in feuchter Umgebung, wie beispielsweise in Badezimmern oder Hallenbädern, sind nicht rostende metallische Materialien, wie beispielsweise Edelstahl oder VA-Stahl, zu bevorzugen.

In vorteilhafter Weise sind sowohl der Grundkörper als auch die poröse Schicht aus metallischem Material hergestellt.

Die poröse Schicht ist direkt als Sinterschicht auf die Unterseite des Grundkörpers aus vorzugsweise metallischem Material gesintert, wodurch eine dauerhafte, stabile, auf Zug und Druck belastbare Verbindung zwischen dem Grundkörper und der porösen Schicht hergestellt werden kann.

Es hat sich zudem als vorteilhaft erwiesen, wenn der Sandwichadapter sowohl ein metallisches Material als auch ein Kunststoffmaterial umfasst. Es könnte beispielsweise die poröse Schicht aus einem metallischen Material, vorzugsweise Sintermetall, und der Grundkörper aus einem Trägerkunststoff bestehen.

Vorzugsweise sind der Grundkörper und die poröse Schicht miteinander verklebt. Entscheidend bei einer Klebeverbindung ist jedoch, dass die gewählten Kunststoffe mit dem metallischen Material verklebbar sind. Geeignete Kunststoffe wären beispielsweise PVC (Polyvinylchlorid), ABS (Acrylnitril-Butadien-Styrol-Copolymerisat) und Polyamide, sofern letztere trotz gewisser Kapazität zur Wassereinlagerung ihre mechanischen Festigkeitseigenschaften nicht über eine gewisse duldbare Schwelle hinaus verschlechtern.

Es hat sich als vorteilhaft erwiesen, wenn für den Grundkörper und die poröse Schicht feuchteresistente Materialien gewählt werden. Die mechanischen Eigenschaften der Materialien sollten also im Wesentlichen nicht durch den Einfluss von Feuchtigkeit veränderbar sein. Insbesondere sollte sich die Zug- und Druckbeständigkeit der Materialien bei feuchter Umgebung, wie in Badezimmern oder Schwimmbädern, nicht verändern. Weiterhin ist es von Vorteil, wenn die Materialien des Grundkörpers und der porösen Schicht bei Raumtemperatur nicht elastisch verformbar sind.

Die Materialschichtdicken des Grundkörpers und der porösen Schicht sind von dem jeweiligen Anwendungsfall abhängig. Beispielsweise ist für die Anbringung eines kleinen Hakens, der beispielsweise lediglich zum Haltern einer geringen Last, beispielsweise eines Handtuchs, ausgelegt ist, ein Grundkörper mit einer geringeren Dicke ausreichend als beispielsweise für die Anbringung eines Regalhalters benötigt wird. Gleichermaßen kann die Dicke der porösen Schicht variieren, je nachdem, wie groß die Längen- und Breitenabmessungen des Sandwichadapters sowie die Porengröße der porösen Schicht sind. Im Allgemeinen gilt: je größer die Porenhohlräume der porösen Schicht sind, desto dünner kann die poröse Schicht ausgebildet sein, und umgekehrt. Dabei die ist die maximal mögliche Porengröße durch die Dicke der porösen Schicht begrenzt.

Das Verhältnis der Dicke des Grundkörpers zu der Dicke der porösen Schicht liegt wie vorstehend dargelegt in einem Bereich zwischen 10:1 und 1:1. Vorzugsweise liegt dieses Verhältnis zwischen 8:1 und 2:1 und höchstvorzugsweise zwischen 6:1 und 4:1.

Die Dicke der Haftmittelschicht kann an die jeweilige Anwendung angepasst werden. Eine Begrenzung der Dicke der Haftmittelschicht, beispielsweise durch einen Klebering, welcher gemeinsam mit der Haftfläche der porösen Schicht und der Fläche das Haftmittel umschließt, wie in der WO 03/036 106 A1 beschrieben, ist bei der Verwendung des Sandwichadapters nicht notwendig. Dies ermöglicht es beispielsweise dünnere, schneller aushärtende Haftmittelschichten zu verwenden.

Der Sandwichadapter kann zumindest auf der Seite seiner Haftfläche eine nicht-planare (gekrümmte und/oder abgewinkelte) Form aufweisen, wodurch dieser an unebene Flächen, wie beispielsweise an Säulen oder gewölbte Oberflächen, anpassbar ist. Somit kann kostengünstig eine sehr große Vielfalt an unterschiedlichen Sandwichadaptern bereitgestellt werden. Besonders vorteilhaft ist es in diesem Zusammenhang, wenn der Grundkörper aus einer zunächst ebenen Blechlage mit aufgesinterter, aufgelöteter oder aufgeklebter poröser Schicht hergestellt ist, welche anschließend gebogen wird und dadurch sehr gut an unebene Flächen angepasst werden kann sowie zudem in beliebiger Flächenform ausgestanzt bzw. zugeschnitten werden kann.

An dem Grundelement ist das Halterelement zum Haltern des Gegenstandes angebracht. Das Halterelement ist mittels eines Befestigungselements, welches nur in den Grundkörper eingreift, an dem Grundkörper befestigbar. Auf diese Art und Weise kann beispielsweise verhindert werden, dass das Befestigungselement, welches in den meisten Fällen aus Edelstahl besteht, mit dem Sintermetall der porösen Schicht in Kontakt kommt, wodurch bei Zufuhr von Feuchtigkeit Korrosion entsteht. Ein Befestigungselement, welches lediglich in den Grundkörper eingreift, ist weiterhin vorteilhaft, da das Befestigungselement somit keine Kräfte direkt in die im Vergleich zum Grundkörper weniger mechanisch stabile poröse Schicht einleitet.

### c) Ausführungsbeispiele

Nachfolgend werden Ausführungsbeispiele der vorliegenden Erfindung beispielhaft anhand der Zeichnungen beschrieben. Es zeigen:
Figur 1a, b: eine Schnittdarstellung eines erfindungsgemäßen Sandwichadapters, welcher mittels eines Haftmittels an einer Fläche angebracht ist;
Figur 2: eine Schnittdarstellung des in der Figur 1a, b gezeigten erfindungsgemäßen Sandwichadapters, welcher mittels eines Haftmittels an einer Fläche angebracht ist und an welchem ein Halterelement mittels eines Befestigungselements angebracht ist;
Figur 3a-d: verschiedene Flächenformen erfindungsgemäßer Sandwichadapter in Aufsicht;
Figur 4: eine Schnittdarstellung eines erfindungsgemäßen Sandwichadapters in einer gewölbten Form, angebracht mittels eines Haftmittels an einer Säule.

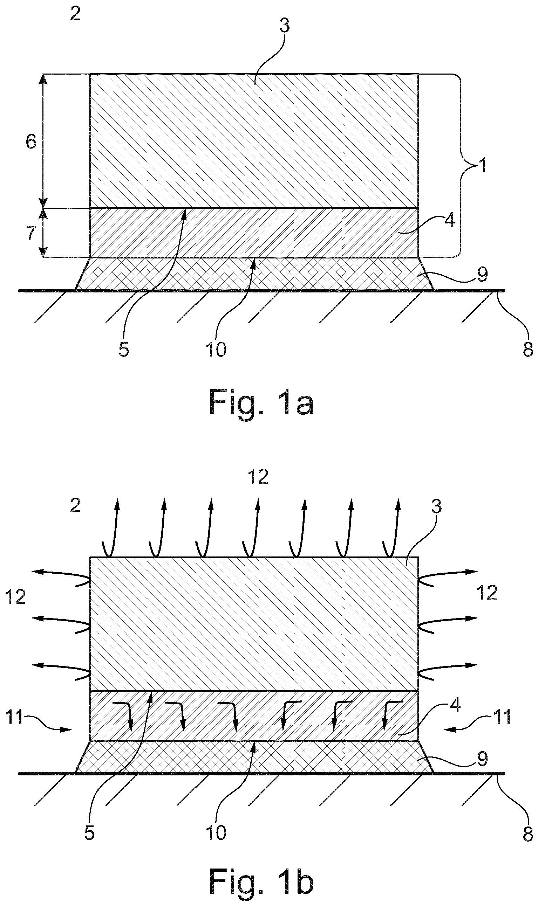

In Figur 1a ist ein erfindungsgemäßer Sandwichadapter 1 in einer Umgebung 2 dargestellt. Der Sandwichadapter 1 umfasst einen Grundkörper 3 sowie eine poröse Schicht 4, die derart aneinander anliegen, dass eine Unterseite 5 des Grundkörpers 3 mit der porösen Schicht 4 in Kontakt ist. Das in Figur 1a beispielhaft dargestellte Verhältnis einer Dicke 6 des Grundkörpers 3 zu einer Dicke 7 der porösen Schicht 4 beträgt ca. 3:1. Die Dicke 7 der porösen Schicht 4 beträgt dabei vorzugsweise 1 mm. Denkbar wäre jedoch auch, dass die Dicke 6 des Grundkörpers 3 lediglich eine Dicke von 1 mm aufweist.

Der Sandwichadapter 1 dient dazu, diesen zum Anbringen eines Gegenstandes (nicht dargestellt), wie etwa einem Haken zum Haltern von Badetüchern oder einer Regalhalterung, zu verwenden. Der Sandwichadapter 1 ist an einer Fläche 8 mittels eines Haftmittels 9 angebracht. Das Haftmittel 9 kann während des Anbringens des Sandwichadapters 1 an der Fläche 8 entweder auf die Fläche 8 oder auf eine Haftfläche 10 der porösen Schicht 4, die der Unterseite 5 des Grundkörpers 3 abgewandt ist, aufgebracht werden. Bei dem Haftmittel handelt es sich um einen feuchtigkeitsaushärtenden Klebstoff.

Bei der Verwendung eines feuchtigkeitsaushärtenden Haftmittels ist somit eine hinreichende Zufuhr von Feuchtigkeit zu diesem erforderlich. Eine hinreichende Versorgung eines an der Haftfläche 10 der porösen Schicht 4 anliegenden Haftmittels 9 mit gas- bzw. luftgebundener Feuchtigkeit wird bei dem erfindungsgemäßen Sandwichadapter 1 mittels der porösen Schicht 4 gewährleistet. Zu diesem Zweck weist die poröse Schicht 4 eine Porosität auf, die einen Transport von Gas und Feuchtigkeit durch diese poröse Schicht 4 hindurch ermöglicht.

Die mit 11 gekennzeichneten Pfeile in Figur 1b zeigen beispielhaft die Bewegungsrichtung von Gas und Feuchtigkeit aus der Umgebung 2 zu der porösen Schicht 4 hin und durch diese hindurch bis zu der Haftfläche 10, an der das Haftmittel 9 anliegt. Die Porosität der porösen Schicht 4 ist folglich so eingestellt, dass hinreichend Gas und Feuchtigkeit zu der Haftfläche 10 transportiert werden kann.

Die in Figur 1b mit 12 bezeichneten Pfeile zeigen schematisch, wie Gas und Feuchtigkeit von dem Grundkörper 3, welcher in dem dargestellten Ausführungsbeispiel gas- und feuchtigkeitsundurchlässig ist, abgewiesen wird.

Es sei an dieser Stelle angemerkt, dass mittels der porösen Schicht 4 dem Haftmittel 9 zugeführtes Gas und zugeführte Feuchtigkeit für die Aushärtung des Haftmittels 9, welches sich zwischen der Haftfläche 10 der porösen Schicht 4 und der Fläche 8, an die der Sandwichadapter 1 angebracht ist/werden soll, ausreichend ist. Der Grundkörper 3 kann folglich vollständig gas- und feuchtigkeitsundurchlässig sein. Es wäre jedoch alternativ denkbar, dass auch der Grundkörper 3 eine gewisse Porosität aufweist, die einen Gas- und Feuchtigkeitstransport zulässt.

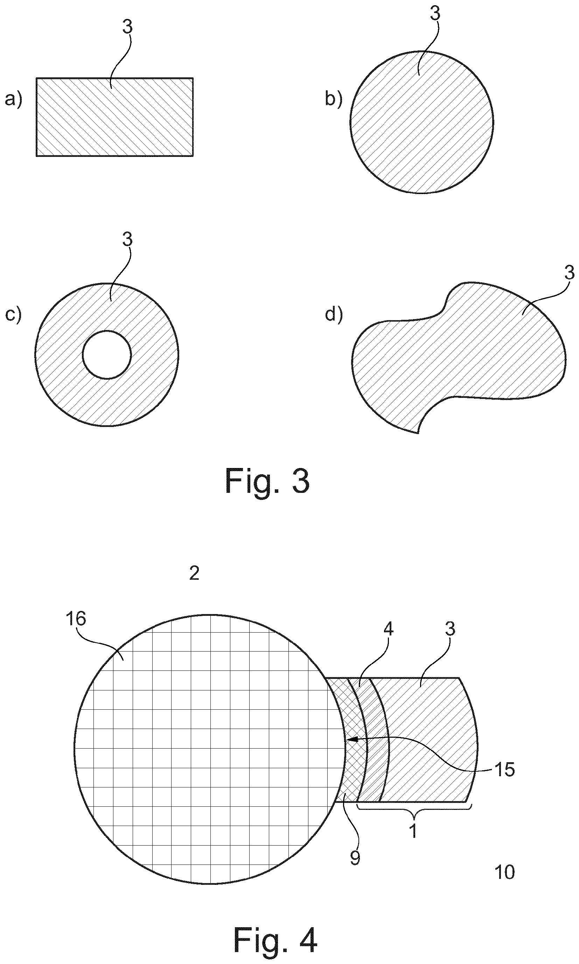

Für die Erfindung ist es entscheidend, dass die poröse Schicht 4 zumindest teilweise mit der Umgebung 2 in Kontakt ist. In den in den Figuren 1, 2 und 4 dargestellten Ausführungsbeispielen ist die poröse Schicht 4 mit ihren schmalen Seitenflächen mit der Umgebung 2 in Kontakt. Im Fall einer in Aufsicht, entsprechend Figur 3b, kreisförmigen Flächengeometrie handelt es sich um eine schmale Kreisringfläche, die den Kontakt zur Umgebung 2 herstellt. Denkbar wäre jedoch auch, dass der Grundkörper 3 Aussparungen, beispielsweise in Form von Durchgangslöchern, aufweist, die einen Transport von Gas und Feuchtigkeit an seine Unterseite 5 und damit zu der porösen Schicht 4 ermöglichen.

Zur Aushärtung des Haftmittels 9 ist es ausreichend, wenn in der Umgebung 2 eine für Innenräume typische Luftfeuchte, wie beispielsweise zwischen 30 % und 70 % relativer Luftfeuchte, vorhanden ist.

Während des Aushärtens des Haftmittels 9 wird stetig luftgebundene Feuchtigkeit durch die poröse Schicht 4 zu der Haftfläche 10 und folglich in das Haftmittel 9 hinein transportiert. Gleichzeitig können über die poröse Schicht 4 in umgekehrter Richtung zu den mit 11 bezeichneten Pfeilen in Figur 1b bei der Aushärtung des Haftmittels entstehende Gase und flüchtendes Bindemittel durch die Poren der porösen Schicht 4 in die Umgebung 2 entweichen.

In den in Figur 1a und b dargestellten Sandwichadaptern 1 liegt die poröse Schicht 4 direkt an der Unterseite 5 des Grundkörpers 3 an. Eine solche direkte Verbindung könnte beispielsweise erreicht werden, wenn der Grundkörper 3 mit der porösen Schicht 4 beispielsweise durch Aufsintern unmittelbar beschichtet ist. In einer anderen Ausführungsform könnte jedoch die poröse Schicht 4 auch auf den Grundkörper 3 aufgeklebt sein, folglich würde sich in einem solchen Fall ein Klebstoff zwischen der porösen Schicht 4 und der Unterseite 5 des Grundkörpers 3 befinden. Auch könnte, im Falle einer Verlötung der porösen Schicht 4 mit dem Grundkörper 3, eine dünne Lötschicht zwischen der Unterseite 5 des Grundkörpers 3 und der porösen Schicht 4 vorhanden sein.

Für die Erfindung ist es nicht wesentlich, dass der Grundkörper 3 und die poröse Schicht 4 entlang ebener Flächen aneinander anliegen. Es könnten auch, zum Beispiel, um eine stabilere Verbindung zwischen dem Grundkörper 3 und der porösen Schicht 4 zu erhalten, der Grundkörper 3 und die poröse Schicht 4 mittels Verzahnungen oder Wölbungen ineinander eingreifen.

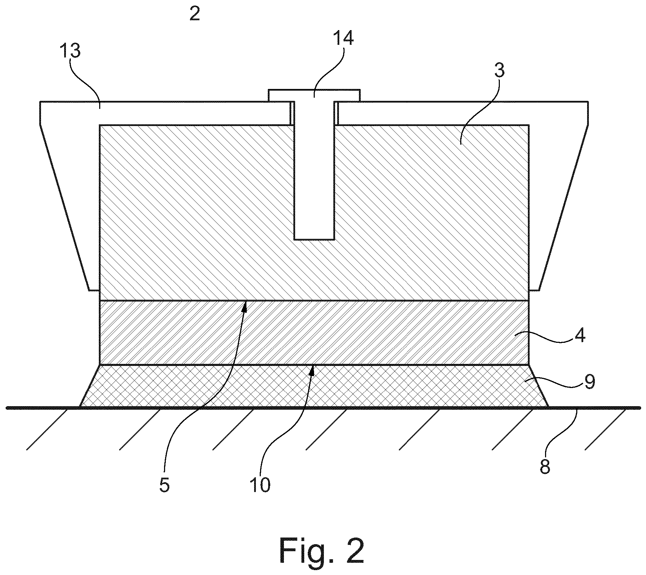

Ein Halterelement 13 zum Haltern eines Gegenstandes (nicht dargestellt) an dem Sandwichadapter 1 ist in Figur 2 dargestellt. Das Halterelement 13, welches auf dem Grundkörper 3 aufliegt, ist an diesem mittels wenigstens eines Befestigungselements 14, im dargestellten Fall mittels einem Niet 14, an dem Grundkörper 3 befestigt. In dem dargestellten Ausführungsbeispiel verjüngt sich das Halterelement 13 an dessen Rändern in Richtung der Fläche 8. Dies ermöglicht es, ein aus dem Stand der Technik bekanntes Anschlussstück mit einem hervorstehenden Rand, welches auf das Halterelement 13 aufgesteckt werden kann, mittels einer Madenschraube, die gegen den sich verjüngenden Rand des Halterelements 13 geschraubt werden kann, zu befestigen. Eine derartige Befestigung eines Anschlussstückes ist zum Beispiel aus der DE 20 2014 102 388 U1 bekannt. Alternativ könnte ein Gegenstand, beispielsweise ein Haken, direkt mit dem Grundkörper 3 verbunden sein.

Ein an dem Grundkörper angebrachter Gegenstand kann, unabhängig von dessen Befestigung an dem Grundkörper, selbst als dekoratives Element dienen oder dazu eingerichtet sein, dass es auf Zug und/oder Druck belastbar ist, um weitere Gegenstände an ihm zu befestigen.

Wie in Figur 2 ersichtlich, bedeckt das Halterelement 13 lediglich den Grundkörper 3 des Sandwichadapters 1, sodass die Gas- und Feuchtigkeitszufuhr gemäß der Pfeile 11 zu der porösen Schicht 4 nicht durch dieses eingeschränkt ist. Dies ermöglicht es, das Halterelement 13 bereits vor der Anbringung des Sandwichadapters 1 an einer Fläche 8 anzubringen.

Ferner ist in Figur 2 ersichtlich, dass das Befestigungselement 14 lediglich in den Grundkörper 3 und nicht in die poröse Schicht 4 eingreift, also mit der porösen Schicht 4 nicht in Kontakt ist. Dies hat zum einen den Vorteil, dass lediglich zwei verschiedene Materialeigenschaften, nämlich die des Befestigungselements 14 und des Grundkörpers 3 beachtet werden müssen, um eine eventuelle Korrosion, die im Kontaktbereich zwischen Befestigungselement 14 und poröser Schicht 4 entstehen könnte, zu verhindern. Zum anderen ergibt sich hieraus der Vorteil, dass die mechanischen Eigenschaften der porösen Schicht 4 nicht nachteilig verändert werden und das Befestigungselement 14 den Gas- und Feuchtigkeitstransport 11 innerhalb der porösen Schicht 4 nicht behindern.

Konstruktionsbedingt oder aus optischen Gründen kann es erwünscht sein, den Sandwichadapter 1 in unterschiedlichen Formen bereit zu stellen. Mögliche Flächenformen, in welchen der Sandwichadapter 1 gefertigt werden kann, sind in den Figuren 3a-d dargestellt. Die Erfindung ist jedoch nicht auf diese Formen begrenzt, vielmehr sind auch quadratische, ovale, dreieckige, vieleckige oder beliebige Flächenformen denkbar.

Ein in Figur 3a dargestellter in Aufsicht rechteckiger Sandwichadapter 1 könnte beispielsweise Seitenlängen von bis zu ca. 60 mm und eine in Figur 3b dargestellte runde Flächengeometrie könnte beispielsweise einen Durchmesser bis zu ca. 50 mm aufweisen.

Ein erfindungsgemäßer Sandwichadapter 1, der an einer unebenen Fläche 15, beispielsweise einer Säule 16, mittels eines Haftmittels 9 angebracht ist, ist in Figur 4 gezeigt. Dabei ist die Säule 16 lediglich ein Beispiel für eine nicht-planare Fläche 15, vielmehr sind an dieser Stelle auch Flächen mit Wölbungen, Kantenverläufen oder beliebigen konkaven oder konvexen Oberflächenformen möglich.

Bei dem in Figur 4 dargestellten Sandwichadapter 1 sind sowohl die Haftfläche 10 der porösen Schicht 4 als auch die Unterseite 5 des Grundkörpers 3 und die der Unterseite 5 gegenüberliegende Seite des Grundkörpers 3 nicht-planar ausgebildet. Denkbar wäre jedoch auch, dass der Sandwichadapter auf der Seite seiner Haftfläche 10 und der Unterseite 5 des Grundkörpers 3 oder lediglich auf der Seite seiner Haftfläche 10 eine nicht-planare Form aufweist und die der Unterseite 5 des Grundkörpers 3 gegenüberliegende Seite planar, also als ebene Fläche, ausgebildet ist.

Die Anbringung des Sandwichadapters 1 an einer gewölbten Fläche 15 kann beispielsweise dadurch erfolgen, dass ein Grundkörper 3 aus einer Blechlage hergestellt wird, seine Flächengeometrie beispielsweise in Form eines Kreises ausgestanzt wird, anschließend eine poröse Schicht 4 auf die Unterseite 5 des Grundkörpers 3 mittels Sintern aufgebracht wird und schließlich der Sandwichadapter 1 an die Form der gewölbten Fläche 15, an die der Sandwichadapter 1 angebracht werden soll, angepasst wird.

### BEZUGSZEICHENLISTE

- 1: Sandwichadapter
- 2: Umgebung
- 3: Grundkörper
- 4: poröse Schicht
- 5: Unterseite
- 6: Dicke Grundkörper
- 7: Dicke poröse Schicht
- 8: Fläche
- 9: Haftmittel
- 10: Haftfläche
- 11,12: Gas- und Feuchtigkeitszufuhr bzw. -transport
- 13: Halterelement
- 14: Befestigungselement
- 15: nicht-planare Fläche
- 16: Säule

## Patentansprüche

1. Adapter (1) zum Anbringen eines Gegenstandes an einer Fläche (8, 15) in einer Umgebung (2), umfassend:
- einen Grundkörper (3) mit einer Unterseite (5), wobei der Grundkörper (3) dazu eingerichtet ist, dass der Gegenstand an diesem befestigt werden kann, wobei an dem Grundkörper (3) ein Halterelement (13) zum Haltern des Gegenstandes angebracht ist, und
- eine an der Unterseite (5) des Grundkörpers (3) anliegende poröse Schicht (4) mit einer dem Grundkörper (3) abgewandten Haftfläche (10) für den Kontakt mit einem Haftmittel (9), wobei die poröse Schicht (4) eine Porosität aufweist, die einen Transport (11) von Feuchtigkeit aus der Umgebung (2) durch sie hindurch zu der Haftfläche (10) ermöglicht,
**dadurch gekennzeichnet, dass**
der Grundkörper (3), die poröse Schicht (4) und die Haftfläche (10) eine flächenmäßige Ausdehnung aufweisen, wonach mit dem Adapter (1) ein Sandwichadapter (1) bereitgestellt ist, der mit dem Grundkörper (3) einerseits und der porösen Schicht (4) andererseits zweischichtig oder zweiteilig ausgebildet ist, wobei die poröse Schicht (4) mit ihren Seitenflächen in Kontakt mit der Umgebung (2) steht, und
die poröse Schicht (4) als Sinterschicht direkt auf die Unterseite (5) des Grundkörpers (3) aufgesintert ist, und
das Verhältnis der Dicke (6) des Grundkörpers (3) zu der Dicke (7) der porösen Schicht (4) in einem Bereich von 10:1 und 1:1 und vorzugsweise zwischen 8:1 und 2:1 und höchstvorzugsweise zwischen 6:1 und 4:1 liegt, und wobei
das Halterelement (13) mittels eines Befestigungselements (14) an dem Grundkörper (3) befestigt ist, welches nur in den Grundkörper (3) eingreift.

2. Adapter (1) nach Anspruch 1, **dadurch gekennzeichnet, dass** die poröse Schicht (4) aus einem Sintermetall, vorzugsweise Bronze-Sintermetall, hergestellt ist.

3. Adapter (1) nach Anspruch 1 oder 2, **dadurch gekennzeichnet, dass** der Grundkörper (3) aus Trägerkunststoff hergestellt ist.

4. Adapter (1) nach Anspruch 1 oder 2, **dadurch gekennzeichnet, dass** der Grundkörper (3) aus einem metallischen Material, insbesondere Edelstahl, Aluminium oder VA-Stahl, hergestellt ist.

5. Adapter (1) nach einem der vorhergehenden Ansprüche, **dadurch gekennzeichnet, dass** der Sandwichadapter (1) zumindest auf der Seite seiner Haftfläche (10) eine nicht-planare Form aufweist.

## Claims

1. Adapter (1) for attaching an object to a surface (8, 15) in a surrounding area (2), comprising:
- a main body (3) having a lower side (5), wherein the main body (3) is configured such that the object can be fastened thereto, wherein a holder element (13) for mounting the object is attached to the main body (3), and
- a porous layer (4), bearing on the lower side (5) of the main body (3), having an adhesive surface (10), facing away from the main body (3), for contacting an adhesive means (9), wherein the porous layer (4) has a porosity which enables a transport (11) of moisture from the surrounding area (2) through said porous layer to the adhesive surface (10),
**characterized in that**
the main body (3), the porous layer (4), and the adhesive surface (10) have a planar extent on account of which a sandwich adapter (1) is provided by way of the adapter (1), said sandwich adapter (1) by way of the main body (3), on the one hand, and the porous layer (4), on the other hand, being configured so as to be two-layered or in two parts, wherein the porous layer (4) by way of the lateral surfaces thereof is in contact with the surrounding area (2), and
the porous layer (4) as a sintered layer is sintered directly onto the lower side (5) of the main body (3), and
the ratio of the thickness (6) of the main body (3) to the thickness (7) of the porous layer (4) is in a range from 10:1 to 1:1, and preferably between 8:1 and 2:1, and most preferably between 6:1 and 4:1, and wherein
the holder element (13) is fastened to the main body (3) by means of a fastening element (14) which engages only in the main body (3).

2. Adapter (1) according to Claim 1, **characterized in that** the porous layer (4) is produced from a sintered metal, preferably bronze sintered metal.

3. Adapter (1) according to Claim 1 or 2, **characterized in that** the main body (3) is produced from a carrier plastics material.

4. Adapter (1) according to Claim 1 or 2, **characterized in that** the main body (3) is produced from a metallic material, in particular stainless steel, aluminium or VA steel.

5. Adapter (1) according to one of the preceding claims, **characterized in that** the sandwich adapter (1), at least on the side of the adhesive surface (10) thereof, has a non-planar shape.

## Revendications

1. Adaptateur (1) destiné à fixer un objet à une surface (8, 15) dans un environnement (2), ledit adaptateur comprenant :
- un corps de base (3) pourvu d'un côté inférieur (5), le corps de base (3) étant conçu pour que l'objet puisse être fixé à celui-ci, un élément de support (13) destiné à supporter l'objet étant fixé au corps de base (3), et
- une couche poreuse (4) étant appliquée sur le côté inférieur (5) du corps de base (3) et étant pourvue d'une surface adhésive (10) dirigée à l'opposé du corps de base (3) et destinée au contact avec un adhésif (9), la couche poreuse (4) présentant une porosité qui permet le transport (11) de l'humidité depuis l'environnement (2) jusqu'à la surface adhésive (10) à travers ledit environnement,
**caractérisé en ce que**
le corps de base (3), la couche poreuse (4) et la surface adhésive (10) présentent une extension surfacique après quoi un adaptateur en sandwich (1), qui est conçu en deux couches ou en deux parties avec le corps de base (3) d'une part et la couche poreuse (4) d'autre part, est pourvu de l'adaptateur (1), la couche poreuse (4) étant en contact avec l'environnement (2) par le biais de ses surfaces latérales, et
la couche poreuse (4) est frittée directement sur le côté inférieur (5) du corps de base (3) en tant que couche frittée, et
le rapport de l'épaisseur (6) du corps de base (3) à l'épaisseur (7) de la couche poreuse (4) est dans la plage allant de 10:1 à 1:1 et de préférence entre 8:1 et 2:1 et le plus préférablement entre 6:1 et 4:1, et l'élément de support (13) étant fixé au corps de base (3) au moyen d'un élément de fixation (14) qui s'engage uniquement dans le corps de base (3).

2. Adaptateur (1) selon la revendication 1, **caractérisé en ce que** la couche poreuse (4) est produite en métal fritté, de préférence en bronze fritté.

3. Adaptateur (1) selon la revendication 1 ou 2, **caractérisé en ce que** le corps de base (3) est réalisé en matière synthétique porteuse.

4. Adaptateur (1) selon la revendication 1 ou 2, **caractérisé en ce que** le corps de base (3) est réalisé en une matière métallique, notamment en acier spécial, en aluminium ou en acier au vanadium.

5. Adaptateur (1) selon l'une des revendications précédentes, **caractérisé en ce que** l'adaptateur en sandwich (1) a une forme non plane au moins du côté de sa surface adhésive (10).
